(19) Europäisches Patentamt
European Patent Office
Office européen des brevets

(11) EP 1 249 506 A1

(12) EUROPEAN PATENT APPLICATION
published in accordance with Art. 158(3) EPC

(43) Date of publication:
16.10.2002 Bulletin 2002/42

(51) Int Cl.7: **C22C 1/00**, C22C 14/00, C22C 27/06, C22C 30/00, C22F 1/11, C22F 1/18

(21) Application number: 00981783.4

(22) Date of filing: 15.12.2000

(86) International application number:
PCT/JP00/08936

(87) International publication number:
WO 01/044526 (21.06.2001 Gazette 2001/25)

(84) Designated Contracting States:
AT BE CH CY DE DK ES FI FR GB GR IE IT LI LU MC NL PT SE TR

(30) Priority: 17.12.1999 JP 359899

(71) Applicants:
• Tohoku Techno Arch Co., Ltd.
Sendai-shi, Miyagi 980-0845 (JP)
• Okada, Masuo
Sendai-shi, Miyagi 982-0807 (JP)

(72) Inventors:
• OKADA, Masuo
Sendai-shi, Miyagi 982-0807 (JP)

• KURIIWA, Takahiro
Utsunomiya-shi Tochigi 321-0942 (JP)
• YAMASHITA, Shinichi
Narita-shi Chiba 286-0011 (JP)
• CHOU, Tsutomu
Chiba-shi, Chiba 262-0015 (JP)

(74) Representative: Weber, Dieter, Dr. et al
Weber, Seiffert, Lieke
Taunusstrasse 5a
65183 Wiesbaden (DE)

(54) **HYDROGEN STORAGE ALLOY**

(57) A hydrogen storage alloy having a body-centered cubic structure phase capable of storing and releasing hydrogen as its main phase, and a composition of the general composition formula: $Ti_{(100-a-0.4b)}Cr_{(a-0.6b)}M_b$, wherein M is at least one element of Mo and W; and $20 \leqq a(at\%) \leqq 80$ and $0 \leqq b (at\%) < 5$.

Fig. 4

Hydrogen Storage Characteristic (4 0 ℃) of as Heat-Treated (1400℃, 1 hr) $Ti_{40}Cr_{57.5}Mo_{2.5}$ Alloy

# Description

## TECHNICAL FIELD

The present invention relates to a hydrogen storage alloy capable of repeatedly carrying out the absorption and release of hydrogen. Particularly, the present invention relates to a BCC-based hydrogen storage alloy having theoretically a high capacity for hydrogen storage. Further, the present invention especially relates to a hydrogen storage alloy having highly practicable properties, including, for example, not only quantitatively excellent hydrogen adsorption and desorption characteristics within practical pressure ranges and temperature ranges but also a capacity of adsorbing and desorbing hydrogen in quite great amounts per unit weight, together with a relatively inexpensive productivity, etc.

## RELATED ART OF THE INVENTION

At present, there have been fears of not only acid rain due to increasing $NO_x$ (nitrogen oxides) but also the global warming due to similarly increasing $CO_2$ in association with an increase in consumption of fossil fuel such as petroleum. Such environmental destruction has become a serious problem. Therefore, our attention has been greatly concentrated on development and practical application of various kinds of clean energy which is friendly to the earth. As a part of this new energy development, practical use of hydrogen energy is given. Hydrogen, which is a constituent element of water inexhaustibly present on the earth, is not only producible by using various kinds of primary energy, but also utilizable as a fluid energy in place of conventionally used petroleum without the risk of destroying the environment because its combustion product is only water. In addition, unlike electric power, it has excellent characteristics such as its relatively easy storage.

In recent years, therefore, investigation has been actively conducted involving hydrogen storage alloys as storage and transport media for hydrogen, and their practical application has been expected. Such hydrogen storage alloys are metals/alloys that can absorb or adsorb, and release hydrogen under an appropriate condition and, by the use of such alloys, it is possible to store hydrogen not only at a lower pressure but also in a higher density as compared to the case of the conventional hydrogen cylinders. In addition, the hydrogen volume density thereof is nearly equal to or rather more than that of liquid or solid hydrogen.

Among these hydrogen storage alloys, $AB_5$ alloys such as $LaNi_5$ and $AB_2$ alloys such as $TiMn_2$ have been put into practical use until now, but their hydrogen absorbing capacity is still insufficient. Therefore, as proposed, for example in Japanese Unexamined Patent Publication (Kokai) No. 10-110225 (JP, A, 10-110225 (1998)), metals having a body-centered cubic structure (hereinafter referred to as " BCC" or " BCC type") (e.g., V, Nb and Ta), and BCC type alloys thereof (e.g., TiCrV-based alloys, etc.) have been mainly examined in recent years because the number of hydrogen absorbing sites is great and the hydrogen absorbing capacity per unit weight of the alloy is an extremely large value as large as H/M = ca. 2 wherein H is an occluded hydrogen atom and M is a constituent element for the alloy (about 4.0 wt% in case of V with an atomic weight of around 50, etc.).

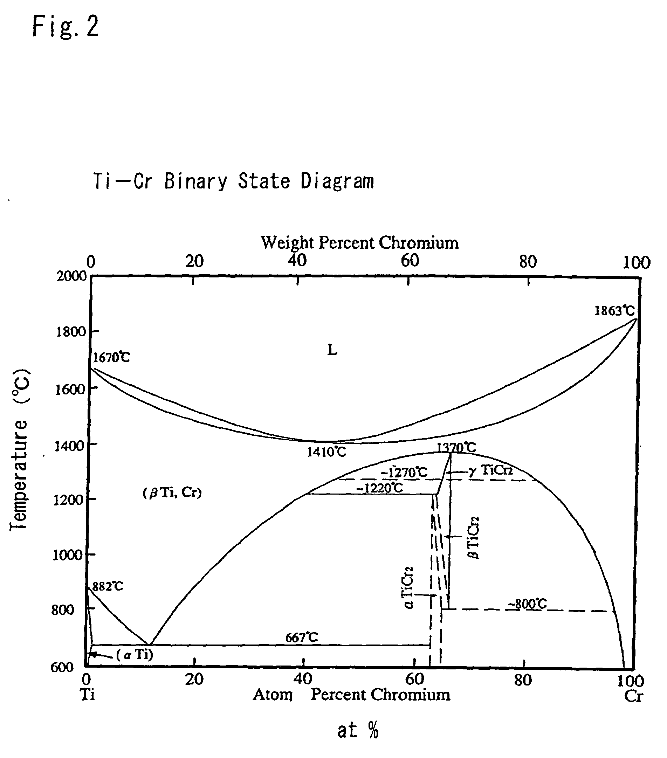

With regard to alloys wherein Ti and Cr are comprised, as suggested in JP, A, 10-110225, when the admixture ratio of the constituent metals in alloys comprised of only Ti and Cr is brought to such an extent that it will be conductible to absorb and release hydrogen at a practicable temperature and pressure (i.e., the atom ratio of Ti is set at 5 < Ti (at%) < 60), a temperature range for forming a BCC structure becomes very narrow between a melting point of the alloy and a temperature at which a C14 crystal structure is formed as also apparent from FIG. 2 (phase diagram for the Ti-Cr binary alloy). Consequently, other C14 crystal structure phases which are different from BCC are formed at 90 wt% or more in the alloy and it is very difficult to produce the BCC. Therefore, the aforementioned TiCrV-based alloys are products obtained by admixing V as an element highly capable of forming BCC together with both Ti and Cr so as to attain the BCC structure in a more stable fashion and at a lower temperature. It has been reported that it is difficult to form the BCC as their main phase even by application of heat-treatment unless the amount of V is at least 10% or more and as a result no good hydrogen adsorption and desorption characteristics are obtainable.

Further, a Ti-Cr-based alloy (comprised of 5 or more elements) having the formula: $Ti_{(100-x-y-z)}Cr_xA_yB_z$, wherein A is one member selected from V, Nb, Mo, Ta and W, and B is two or more members selected from Zr, Mn, Fe, Co, Ni and Cu, and its crystalline structure is BCC, is disclosed in Japanese Unexamined Patent Publication (Kokai) No. 7-252560 (JP, A, 7-252560 (1995)), wherein it is pointed out that the aforementioned admixture of 5 or more elements is essential for acquiring the aforementioned BCC.

However, there are still problems: since V to be admixed with the aforementioned alloy has an atomic weight approximately similar to that of Ti or Cr, it may be admixed at an elevated quantity without reducing its hydrogen storage capacity per unit weight of the alloy product so much, but because it is very expensive, especially highly pure one (99.99 % purity) employed for such an alloy is extremely expensive, the price of the alloy product results in a very high level, whereby alloy costs will increase for absorbing and storing an equal amount of hydrogen.

Therefore, for inexpensive alloys free of using precious V, Mo-Ti-Cr-based and W-Ti-Cr-based alloys are proposed wherein Mo or W is admixed as, like V, an element highly capable of forming BCC with both Ti and Cr. However, for these Mo and W, as suggested in Japanese Unexamined Patent Publication (Kokai) No. 10-121180 (JP, A, 10-121180 (1998)), it has been reported as follows: such alloys are not made into BCC forms even by application of heat-treatments when Mo and/or W is admixed at 0 at%, nor is BCC obtainable as the main phase when Mo and/or W is admixed at a low level, similarly to the above V. Accordingly, no good hydrogen absorption and desorption characteristics will appear. There are also problems: when the amounts of Mo and W to be admixed increase, the hydrogen absorbing capacity per unit weight of such alloys will be reduced because of their large atomic weight, and in case where these hydrogen storage metal alloys are used as energy sources for automobiles, bicycles, etc. in the form of hydrogen gas storage tanks and nickel hydrogen batteries, including fuel batteries, their weights would unavoidably increase when an attempt is made at attaining a necessary electric power and hydrogen-supplying performance.

In view of the foregoing points, the present inventors have paid much attention to the aforementioned problems and, as a result, succeeded in the present invention. An object of the present invention is to provide a hydrogen storage metal alloy which is (i) producible in the aforementioned form having BCC main phases even if the level of precious V, or Mo and W which each lead to a decrease in hydrogen absorbing capacity per unit weight, is made null or as minimal as possible, also (ii) excellent in view of its cost and hydrogen absorbing capacity per unit weight and (iii) highly practicable.

## SUMMARY OF THE INVENTION

In order to solve the aforementioned problems, the present invention provides a novel hydrogen storage alloy for adsorption, storage and desorption of hydrogen. According to the present invention, the novel hydrogen storage alloy has the following characteristics:

(1) it has as its main phase a body-centered cubic structure-type phase capable of absorbing, storing and releasing hydrogen, and
(2) it has a composition of the following general composition formula:

$$Ti_{(100-a-0.4b)}Cr_{(a-0.6b)}M_b$$

wherein M is at least one element of molybdenum (Mo) and tungsten (W); and $20 \leqq a(at\%) \leqq 80$ and $0 \leqq b(at\%) < 5$.

Such characteristics lead to the following:

the reduction in a hydrogen storage capacity per unit weight according to the weight increase in the resulting alloy can be minimized or nullified by setting Mo and W levels to either less than 5 at% or 0, and inexpensive hydrogen storage alloys can be also obtained because no V (which is precious) is contained in the alloy, provided that other elements may be optionally admixed as long as their admixture does not affect greatly the aforementioned properties of the hydrogen storage alloys.

In the hydrogen storage alloys of the present invention, the atom % of Mo element and/or W element in the alloys is preferably set in the range of $3 \pm 1.5$ at%.
As a result thereof, the alloys can have a higher hydrogen storage capacity per unit weight within a Mo and/or W level range of less than 5 at% as aforementioned.
It is preferred that the hydrogen storage alloys of the present invention are those wherein an element, X, having an atomic radius larger than that of Cr but smaller than that of Ti may be contained at an atom % concentration, d (at%), ranging within $0 \leqq d (at\%) \leqq 20$.
As a result thereof, the element X can be admixed the atomic radius of which is larger than that of Cr but smaller than that of Ti, thereby inhibiting the formation of a C14 (Laves phase) structure so as to extend a temperature range for forming a BCC structure phase in place of the aforementioned C14 (Laves phase) structure, with the result that the hydrogen storage metal alloys can be produced with the BCC structure phase in a stable fashion even at low levels of V, Mo and W, which each have a potent BCC structure-forming capability with both Ti and Cr.
It is preferred that the hydrogen storage alloys of the present invention contain at least one or more elements (T) selected from Nb, Ta, Mn, Fe, Al, B, C, Co, Cu, Ga, Ge, Ln (a variety of lanthanoid metals), N, Ni, P, and Si at an atom % concentration, e (at%), ranging within $0 \leqq e(at\%) \leqq 10$.
As a result thereof, the admixture of T allows controlling appropriately a plateau pressure at which the resultant hydrogen storage metal alloys can absorb, store and release hydrogen.
The selected compositions for hydrogen storage alloys according to the present invention are set forth on the basis of the following reasoning:
FIG. 2 depicts a Ti-Cr binary system phase diagram in connection with the present invention. As seen in FIG. 2, the BCC phase is present throughout all composition ranges in Ti-Cr series at 1643 K (1370°C) or higher. In light of the atomic radius of Ti (0.147 nm) greater than that of Cr (0.130 nm), when the level of Ti increases and the level of Cr lessens, the alloy will increase its BCC phase lattice constant but lower its plateau pressure. Although the plateau pressure of the hydrogen storage alloy varies depending on the alloy-operating temperature, the ratio of Ti to Cr may vary in order to acquire a desired operating temperature. Therefore, a suitable Ti/Cr ratio can be optionally selected. In embodiments as described herein below, the starting composition is set to the extent of $Ti_{40}Cr_{60}$ so as to acquire a suitable plateau pressure at 40°C (313K), but this invention is not limited to. The plateau pressure of the hydrogen storage alloys varies depending on their alloy-operating temperature, and the plateau pressure can be controlled in Ti-Cr-M-based hydrogen storage alloys by changing the ratio of Ti to Cr. The plateau pressure is remarkably raised when the Cr level "a" exceeds 80 at% but on the contrary extremely lowered when it is below 20 at%, thereby leading to a poor practicability. Accordingly, the Ti/Cr ratio which is suited for a desired working temperature may be selected within a range of $20 \leqq a(at\%) \leqq 80$.

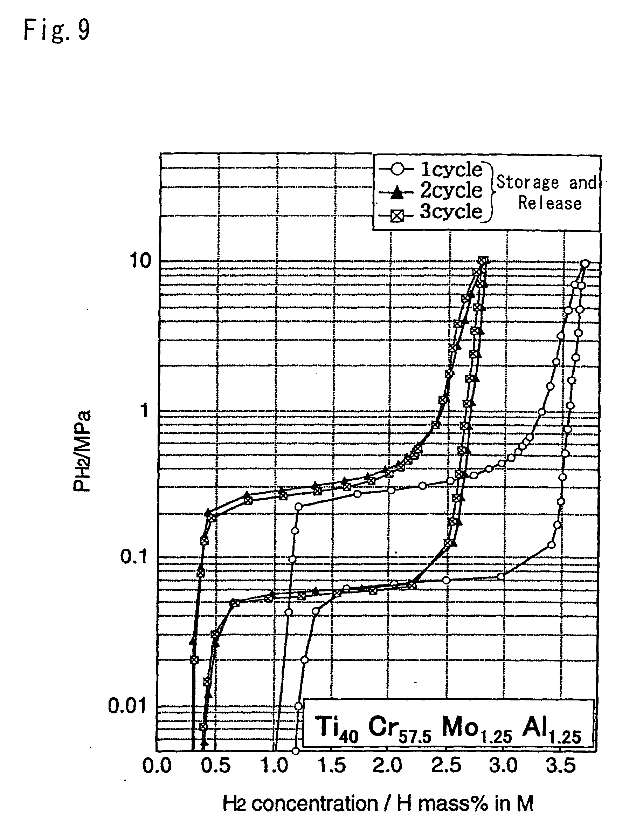

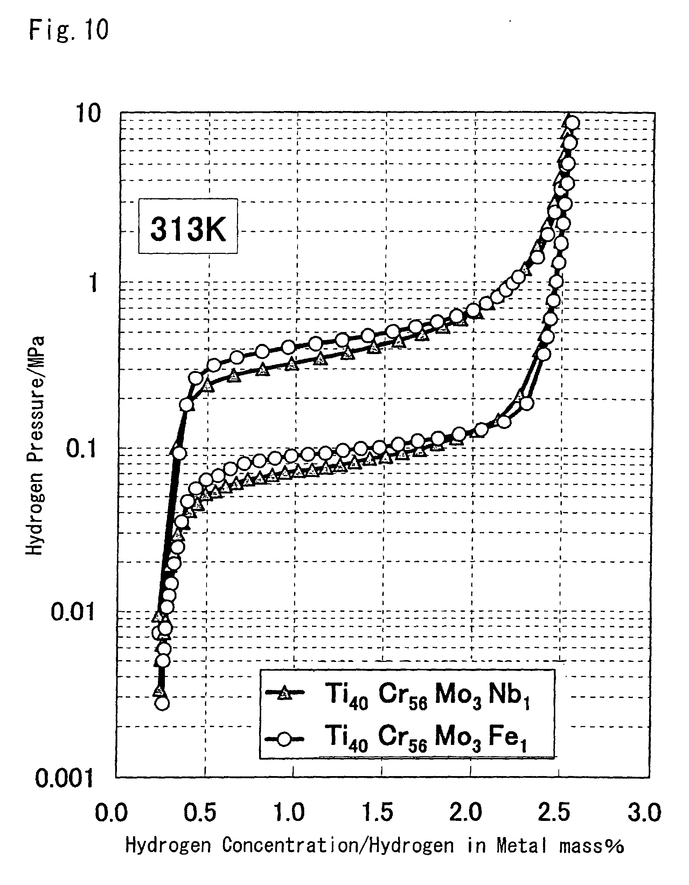

Mo and W elements are effective because Mo and W each have a great BCC structure-forming property to Ti-Cr binary alloys and the addition of Mo or W to the Ti-Cr binary alloy facilitates the formation of the BCC structure as aforementioned. However, an excessive admixture of Mo and/or W will lead to an increase in specific gravity for hydrogen storage metal alloy products because such Mo and W are heavy elements with a relatively large atomic weight. As seen in FIGs. 9 and 10, when their level exceeds about 5 at%, this will bring a significant deterioration on the maximized hydrogen adsorption and desorption characteristics. In light of the foregoing points, the fundamental formula:

$$Ti_{(100-a-0.4b)}Cr_{(a-0.6b)}M_b$$

wherein a is $20 \leqq a(at\%) \leqq 80$, b is $0 \leqq b(at\%) < 5$ and M is at least one element selected from Mo and W, is derived. It is also effective to use a substituent element T in the resulting alloys with the purpose of adjusting the plateau pressure in the same fashion as aforementioned, provided that T is at least one or more elements selected from the group consisting of Nb, Ta, Mn, Fe, Al, B, C, Co, Cu, Ga, Ge, Ln (various lanthanoid metals), N, Ni, P and Si, and an amount of substituents is $0 \leqq c (at\%) \leqq 10$.

Alloys having a composition with a low level of these elements Mo and W are hardly formed in the structure of BCC as pointed out in the prior art. As apparent from the phase diagram of a Ti-Cr binary alloy (FIG. 2), this is attributable to the fact that a temperature range for affording the BCC structure is too narrow throughout the Ti-Cr admixture ratios wherein temperature and pressure ranges at which the hydrogen storage alloy can work will be within practicable values, i.e., at the Cr level of 20 to 80 at%.

As seen in the aforementioned phase diagram (FIG. 2), however, for example, when the level of Cr is gradually reduced from 60 at% (it has the same meaning as the level of Ti gradually increases from 40 at%), a temperature range eligible for giving a BCC structure would expand. This is presumably attributed to the following: since the Laves phase is represented by a composition of an $AB_2$ type and the atomic radius ratio of A to B (rA : rB) = about 1.225 : 1 is necessary for forming an ideal geometric structure in such a composition while the atomic radius ratio of Ti to Cr (both of which are used according to the present invention) is 1.13 : 1, which is far different from the above ideal value and unsuitable for forming the ideal Laves phase structure, Ti will quantitatively increase, and invade B sites in apparently more quantities whereby consequently the atomic radius ratio at A sites will become closer to that at B sites, thereby inhibiting the formation of Laves phases.

Now, by developing such ideas, when an element having an atomic radius smaller than that of the A site but larger than that of the B site is admixed therewith for substitution, the formation of Laves phase can be inhibited even if the substituent element invades the A site and also even if the B site is replaced.

Hence, it has been thought that there is a possibility of enabling a BCC formation in alloy products similarly to the above V case as well as the Mo or W case and therefore an element X (its atomic radius is smaller than that at the A site (Ti) but larger than that at the B site (Cr)) can be added to the alloy to expand a temperature range eligible for forming BCC whereby a hydrogen storage alloy may be produced with a BCC structure in a more stable fashion.

The element X having an atomic radius smaller than that at the A site (Ti) but larger than that at the B site (Cr) includes, in addition to the above Mo, W, and V, for example, at least one or more elements selected from the group consisting of Al, Ru, Rh, Pt, Nb, Ta, Sb and others.

BRIEF DESCRIPTION OF THE DRAWINGS

FIG. 1 is a flow chart illustrating a process for producing the hydrogen storage alloy according to an embodiment of the present invention.

FIG. 2 depicts a Ti-Cr binary system phase diagram.

FIG. 3 is an X-ray diffraction pattern of as heat-treated (at 1400°C for 1 hour) alloy

$$Ti_{40}Cr_{57.5}M_{2.5} \ (M=Mo, W).$$

FIG. 4 is a graph showing hydrogen absorption and desorption characteristics (at 40°C) for as heat-treated (at 1400°C for 1 hour) alloy $Ti_{40}Cr_{57.5}Mo_{2.5}$.

FIG. 5 is a graph showing hydrogen absorption and desorption characteristics (at 40°C) for as heat-treated (at 1400°C for 1 hour) alloy $Ti_{40}Cr_{57.5}W_{2.5}$.

FIG. 6 is a graph showing the relationship of admixed amounts of Mo versus hydrogen absorption and desorption characteristics for a Ti-Cr-Mo alloy.

FIG. 7 is a graph showing the relationship of admixed amounts of W versus hydrogen absorption and desorption characteristics for a Ti-Cr-W alloy.

FIG. 8 is a graph showing hydrogen absorption and desorption characteristics (at 40°C) for alloy $Ti_{42.5}Cr_{57.5}$.

FIG. 9 is a graph showing hydrogen absorption and desorption characteristics (at 40°C) for alloy

$$Ti_{40}Cr_{57.5}Mo_{1.25}Al_{1.25}.$$

FIG. 10 is a graph showing hydrogen absorption and desorption characteristics (at 40°C) for alloy

$$Ti_{40}Cr_{56}Mo_3M_1 \text{ wherein M=[Nb, Fe]}.$$

FIG. 11 is a graph showing hydrogen absorption and desorption characteristics (at 40°C) for alloy

$$Ti_{40}Cr_{57}Mo_2La_1.$$

PREFERRED EMBODIMENTS FOR EXECUTING THE INVENTION

Described below are the hydrogen storage metal alloys of the present invention in detail, relying on experiments conducted by the present inventors.

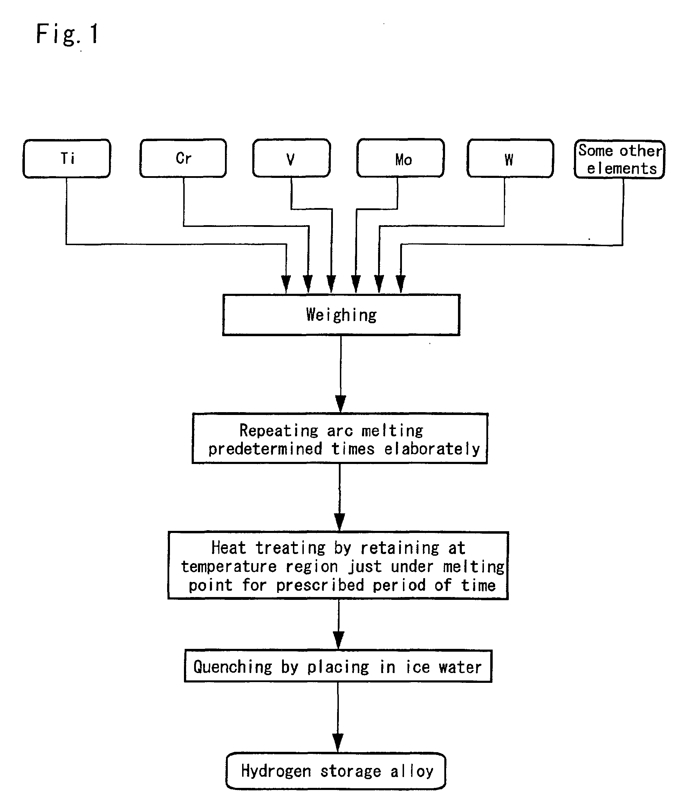

First, FIG. 1 is a flow chart showing a preferred embodiment of the process for producing the hydrogen storage alloys according to the present invention. Such a process is applied to the production of hydrogen storage alloys used in the experiments conducted by the present inventors as described herein below.

In this process for the production of hydrogen storage metal alloys, each constituent metal for an intended hydrogen storage alloy (for example, each of Ti, Cr and V where $Ti_{37.5}Cr_{60}V_{2.5}$ is prepared as a product) is weighed at an amount corresponding to each composition ratio so as to bring the total weight of a resultant ingot to 12.5 g.

Each individual metal thus weighed is placed in an arc melting plant (not depicted), subjected to repeated treatments (melting-stirring ← → solidification) predetermined times (which may vary depending on the number of constituent elements in experiments but be usually approximately 4 to 5 times) in an argon atmosphere of about 40 kPa with scrupulous care to elevate a uniformity and the resultant homogenized ingot is then maintained at a temperature region just lower than the melting point of its melt for a predetermined time to accomplish the heat treatment.

Since a temperature region at which BCC forms are produced is present at an area just below the melting temperature owned by an alloy having a target composition as shown in the above FIG. 2 (phase diagram), the heat-treatment may be preferably effected at such a temperature region at which the BCC is produced and just below the melting temperature. For example, in the aforementioned composition containing about 60 at% of element Cr, the heat-treatment is preferably effected by retaining the molten alloy at about 1400°C. It is also preferable to select a suitable heat-treating temperature from temperature areas at which a target alloy is produced in the form of BCC and just below the melting temperature of the target alloy, depending on its alloy composition. Among temperature areas at which the BCC is produced and just below the melting temperature thereof, it should be noted that it will take a longer time to accomplish the heat-treatment when the treatment temperature is too low (about 1000°C or lower) while it will take only a short time but the heating cost will be increased much when it is too high. Therefore, by taking the foregoing points into account, it is preferable to select a heat-treating temperature.

When a heat-treating time is too short, it will be impossible to accomplish the formation of sufficient BCC structure phases, and when it is too long, not only the heat-treating cost will be increased but also an adverse action will appear whereby heteromorphic phases would be precipitated to deteriorate the hydrogen absorption and desorption characteristics. Accordingly, the operation period can be suitably selected on the basis of a selected heat-treating temperature, but it may be preferably within a range of from 1 min to 1 hour.

In the embodiments, after melting ingots, alloys per se are subjected to the aforementioned heat treatment without making any shapes. Since such a process does not require that cooled alloys are re-heated but allows producing efficiently alloy products having a BCC structure phase, it is preferable but the present invention is not limited to. For example, it may be preferred that molten alloys are shaped once by methods such as strip casting, single rolling and atomizing to afford plates, ribbons or powders, then cooled and the resultant alloys each having either the BCC phase + the Laves phase or the Laves phase alone are subjected to the aforementioned heat treatment so as to give products each having the BCC structure phase as the main phase.

Among these alloys, alloys (ingots) heat-treated to an extent that the BCC structure phase takes place as the main phase are rapidly cooled by dipping into ice water to give alloy products wherein the above BCC structure phase is still retained. In the embodiments, the aforementioned rapid cooling (quenching) is carried out by dipping into ice water, but the present invention is not limited to. Any can be optionally selected for these cooling methods. However, since the volume ratio of BCC structure phase varies depending on cooling rates and a slow cooling rate leads to a decrease in the BCC structure phase volume ratio, it is desired that the alloy is quenched preferably at a cooling rate of 100 K/sec or more.

Although the alloys of the present invention have a composition apt to induce a spinodal decomposition readily, it is defined that, because spinodal decomposing tissues cause deterioration of alloy's hydrogen absorption and desorption characteristics, they are permitted to the extent there is an unavoidable formation.

It has been examined and ascertained herein below that the BCC structure phase is produced by the aforementioned production processes and experimental results are also shown which support grounds for selecting the above compositions.

With respect to Ti-Cr-Mo(W)-based hydrogen storage alloys which have been associated with the aforementioned problems (for example, because of heavy elements with a large atomic weight in spite of their high BCC-forming capability against Ti-Cr alloys, when Mo and W are admixed in large quantities, the alloy products hardly exert sufficient properties, etc.), each content level of Mo and W therein has been examined according to the aforementioned production process. The results are described herein below.

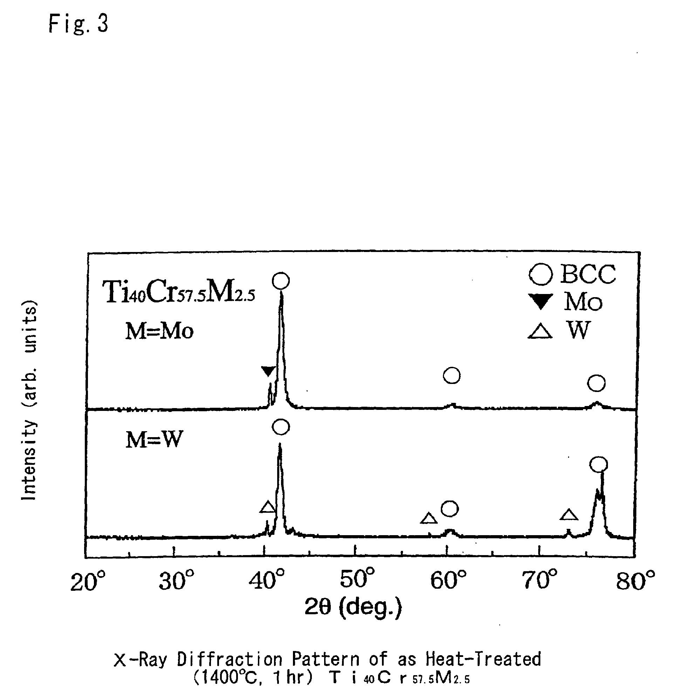

An X-ray diffraction pattern each of as heat-treated alloys $Ti_{40}Cr_{57.5}Mo_{2.5}$ and $Ti_{40}Cr_{57.5}W_{2.5}$ is shown in FIG. 3. It is found from the X-ray diffraction pattern as shown in FIG. 3 that, although Mo is admixed at a small amount, i.e., at 2.5 at% only, the resultant alloy products are substantially in the form of a BCC mono phase. For W, the BCC phases is also produced as the main phase though the Laves phase is slightly present.

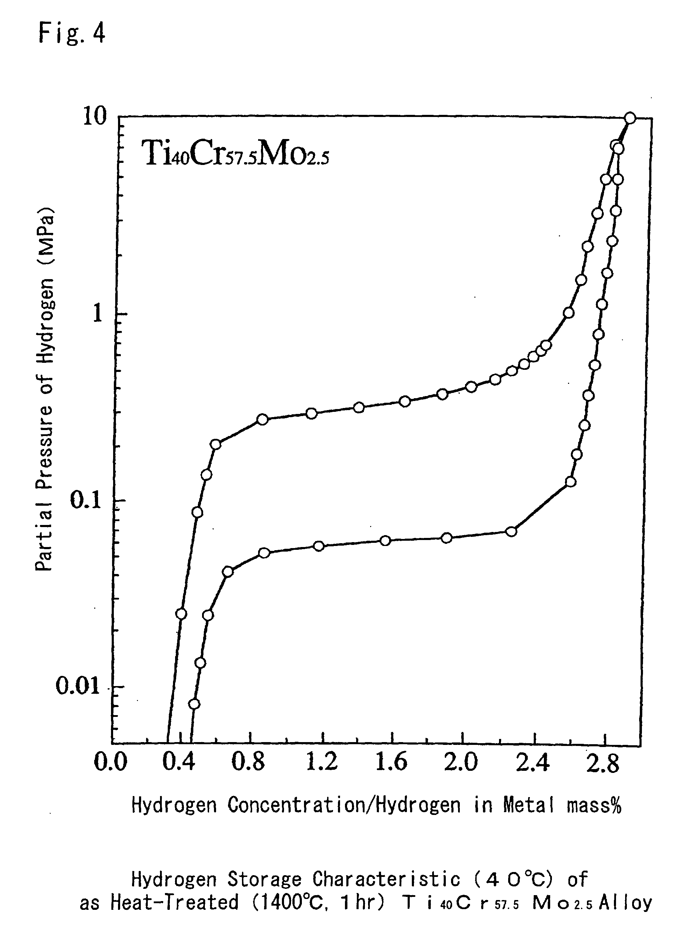

The hydrogen adsorption and desorption characteristics of as heat-treated alloy $Ti_{40}Cr_{57.5}Mo_{2.5}$ are shown in FIG. 4. It has been noted therefrom that an amount of hydrogen occluded thereby is derived to an extent of about 2.9 wt%, which is close to a value of 3 wt% corresponding to the marginal performance considered to be intrinsically owned by the Ti-Cr binary BCC phase.

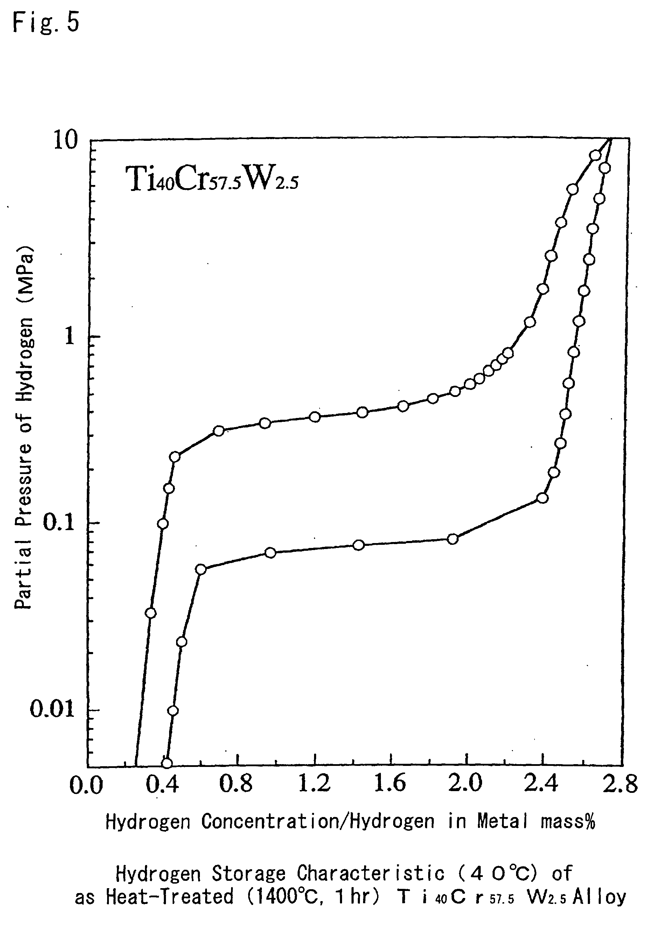

The hydrogen adsorption and desorption characteristics of as heat-treated alloy $Ti_{40}Cr_{57.5}W_{2.5}$ are shown in FIG. 5. Similarly to the aforementioned Mo, the W-substituted alloys come to be substantially in the form of a BCC mono phase and their hydrogen adsorption capacity reaches about 2.7 wt % or more. Since W has a larger atomic weight, the maximal hydrogen adsorption capacity will be slightly reduced, in comparison with Mo and V cases, when W is admixed at an equal amount thereto.

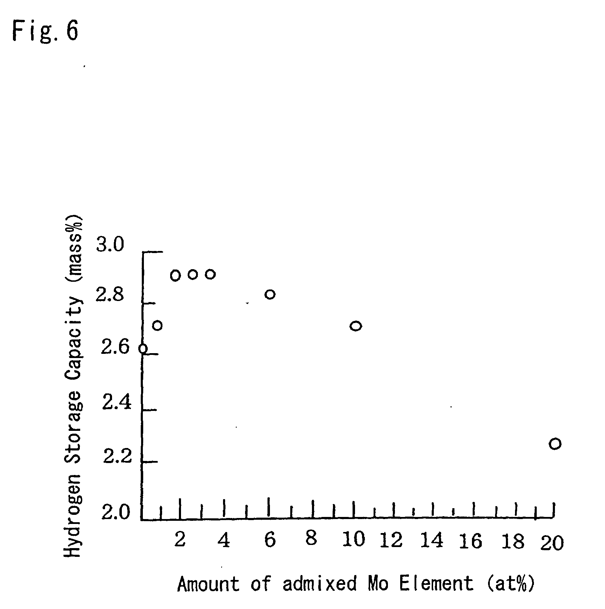

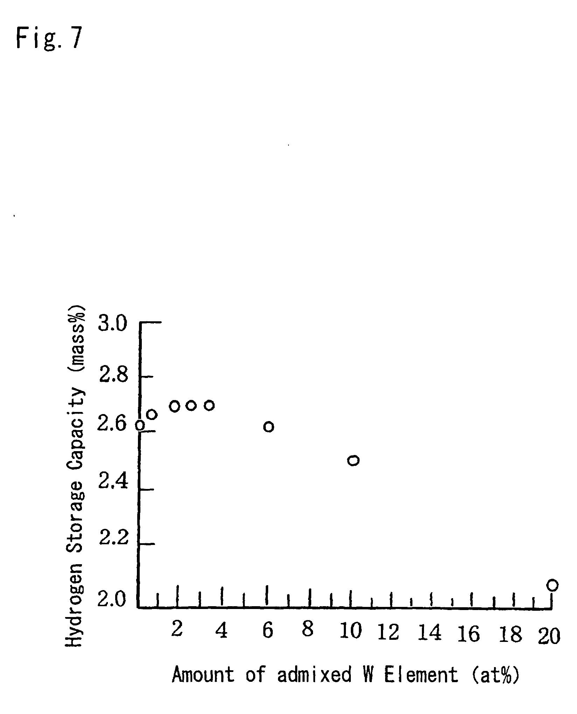

The influence of additive Mo and W levels on the hydrogen adsorption and desorption characteristics for such heat-treated Ti-Cr-Mo and Ti-Cr-W alloys is shown in FIGs. 6 and 7. When the additive element is Mo, it has been found that the admixture of Mo at a small amount leads to an increase in hydrogen adsorption capacity, i.e., the hydrogen adsorption capacity is maximized at about $3 \pm 1.5$ at% of the additive Mo while the hydrogen adsorption capacity is gradually decreased in the 5 at% or more Mo regions which were presumed to be preferable in the prior art. It has also been found that, when Mo is admixed at 10 at% or more, the hydrogen adsorption capacity is reduced less than that of heat-treated Mo-free Ti-Cr alloys. When the additive element is W, it has been observed that the resultant alloy products have a tendency similar to that for the aforementioned Mo. It has thus been found that the admixture of W at a small amount leads to an increase in hydrogen adsorption capacity, i.e., the hydrogen adsorption capacity is maximized at about $3 \pm 1.5$ at% of the additive W while the hydrogen adsorption capacity is gradually decreased in the 5 at% or more W regions which were presumed to be preferable in the prior art. It has also been found that, when W is admixed at 6 at% or more, the hydrogen adsorption capacity is reduced less than that of heat-treated W-free Ti-Cr alloys.

Hence, these elements Mo and W are preferably admixed at a micro amount so as to obtain the effect of increasing occupied volume ratios of the BCC phase that appears in such Ti-Cr binary alloys. In comparison for the intensity of a BCC-forming tendency in Ti-Cr alloys, it is found that Mo and W elements tend to increase the BCC-occupied volume ratio even when they are admixed at a smaller amount than V, and reversely reduces the hydrogen storage amounts per unit weight when they are admixed at an excessive amount. Although each of Mo and W is independently admixed alone in order to clarify the efficacy of individual admixed elements in the foregoing embodiments, the present invention is not limited to. It is preferred that one of two elements Mo and W may be admixed in combination with the other. For amounts of the admixed elements in this instance, it is preferable that a total amount of admixed elements Mo and W may be less than 5 at%.

Namely, it is supposed that the formation of the BCC phase is facilitated more in the Ti-Cr-based alloy as its structure is more distant from the ideal geometric structure of the Laves phase ($TiCr_2$) represented by the $AB_2$ type composition. Accordingly, the BCC phase can be easily formed by the admixture of a readily solid-soluble element effective to avoid the ideal atomic radius ratio 1.225:1 between both the constituent atoms, A and B, for the Laves phase. When the substitution is performed with an element having an atomic radius smaller than the site A but larger than the site B, the substituent element can inhibit the Laves phase formation even if it intrudes into the site A and similarly inhibit the Laves phase formation even if it substitutes the B-site, so that the formation of the BCC type phase will be facilitated. Such elements include, for example, Al, Ru, Rh, Pt, Nb, Ta, Sb and the like, in addition to the above Mo, W and V.

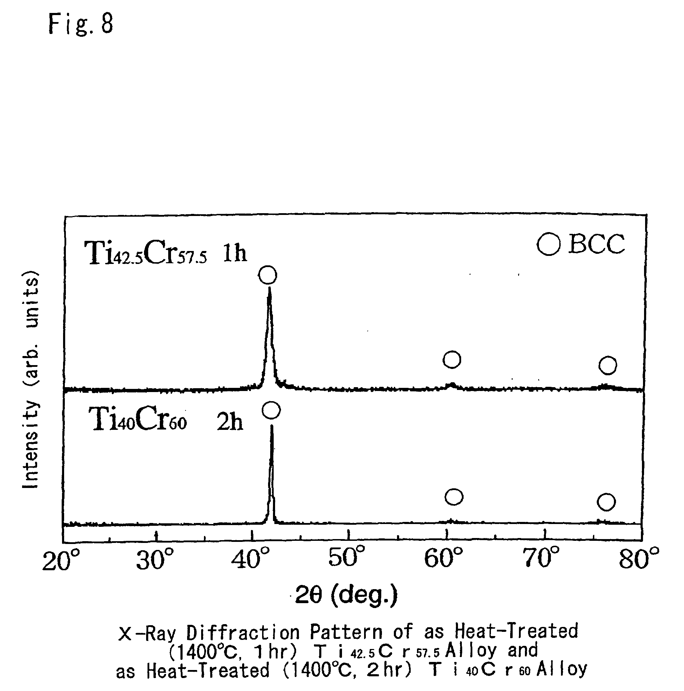

Thus, there has been no report that, in view of such atomic radiuses, the Ti-Cr binary alloy was subjected to the formation of a BCC mono phase or the facilitation of a BCC phase formation. This is one of the grounds for supporting the novelty of the present invention. The hydrogen absorption and desorption characteristics of as heat-treated alloy $Ti_{42.5}Cr_{57.5}$ are shown in FIG. 8. Its hydrogen storage capacity is 2.6 wt % or more. Distinctively from conventional Ti-Cr Laves alloys and the like as reported in the prior art, these results evidence that the BCC phase occurring in the Ti-Cr binary alloy has advantageous hydrogen adsorption and desorption characteristics.

The PCT curve for $Ti_{40}Cr_{57.5}Mo_{1.25}Al_{1.25}$ obtained by retaining at 1400 °C for 1 hr followed by immediate quenching in ice water is shown in FIG. 9. This alloy shows an excellent hydrogen storage capacity equivalent to that of $Ti_{40}Cr_{57.5}Mo_{2.5}$, and its maximum hydrogen storage capacity at 40°C is as high as 2.79 mass%. It is estimated that a hydrogen storage capacity of about 3 can be obtained by using the temperature difference. Thus, it is also confirmed that, even if half Mo is substituted with Al, excellent BCC mono phase hydrogen storage alloys can be obtained, and it is more effective in increasing the plateau pressure than the addition of only Mo.

This alloy is achieved by the admixture of highly BCC-productive Mo in combination with Al (0.143 nm) capable of suppressing the Laves phase formation but reversely promoting the BCC type formation. The additive elements showing a similar efficacy include Ru, Rh, Pt, Nb, Ta, Sb and the like as described above, from the point of atomic radius.

The PCT curve for an alloy wherein Nb is compositely added to the Ti-Cr-Mo alloy is shown in FIG. 10. This alloy $Ti_{40}Cr_{56}Mo_3Nb_1$ is obtained by retaining at 1400 °C for 10 min followed by quenching in ice water. From the X-ray diffraction pattern, it is judged that the alloy $Ti_{40}Cr_{56}Mo_3Nb_1$ is composed of the BCC single phase. Nb is an element solid-soluble with Ti throughout all rates and also with Cr in a small amount, and can be solid-solved in the Ti-Cr-Mo alloy to avoid the ideal structure of the Laves phase. Thus, the Nb admixture is also supposed to be effective in suppressing the Laves phase, similarly to the Al case.

The $Ti_{40}Cr_{56}Mo_3Fe_1$ alloy as shown in FIG. 10 is also a BCC single phase alloy subjected to the same heat treatment as the above $Ti_{40}Cr_{56}Mo_3Nb_1$ alloy, but the plateau pressure is slightly different between the two alloys. The additive elements capable of controlling the plateau pressure with a small amount of such additives include Ta, Nb, Mn, Al, B, C, Co, Cu, Ga, Ge, Ln (various lanthanoid metals), N, Ni, P, Si, etc., in addition to Fe. It is effective to add at least one or more elements selected from such additive elements.

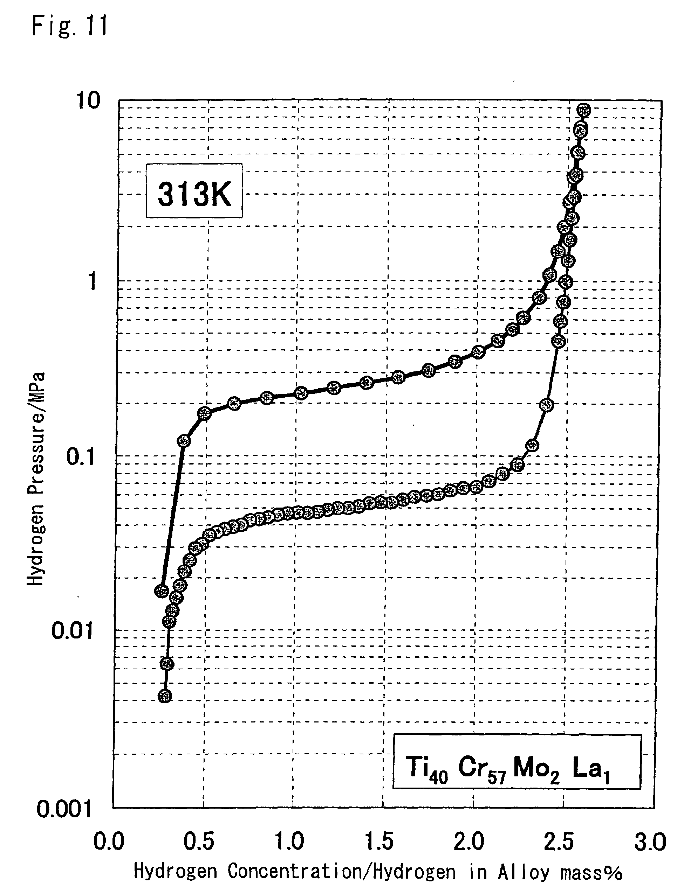

The lanthanoid metals are extremely useful elements not only capable of controlling the plateau pressure as described above but also having the efficacy on the suppression oxidation by their admixture with industrial raw materials with low purity. The PCT curve at 40 °C for $Ti_{40}Cr_{57}Mo_2La_1$ alloy is shown in FIG. 11. When the amount of admixed La is about 1%, the oxygen intruding into the alloy tissue can be suppressed with hardly decreasing the hydrogen storage capacity.

## Claims

1. A hydrogen storage alloy having the following characteristics:

   (1) it has as its main phase a body-centered cubic structure phase capable of absorbing, storing and releasing hydrogen, and
   (2) it has a composition of the following general composition formula:

   $$Ti_{(100-a-0.4b)}Cr_{(a-0.6b)}M_b$$

   wherein M is at least one element of molybdenum (Mo) and tungsten (W); and $20 \leqq a(at\%) \leqq 80$ and $0 \leqq b(at\%) < 5$.

2. The hydrogen storage alloy according to claim 1 wherein the atom % of Mo and/or W is within a range of $3 \pm 1.5$ at%.

3. The hydrogen storage alloy according to claim 1 or 2 which contains an element X having an atomic radius larger than Cr and smaller than Ti, at a range of $0 \leqq d(at\%) \leqq 20$, provided that d is an atom % concentration (at%) of X.

4. The hydrogen storage alloy according to any of claims 1 to 3 which contains at least one or more elements (T) selected from Nb, Ta, Mn, Fe, Al, B, C, Co, Cu, Ga, Ge, Ln (various lanthanoid metals), N, Ni, P and Si are contained at a range of $0 \leqq e$ (at%) $\leqq 10$, provided that e is an atom % concentration (at%) of T.

Fig. 1

Ti | Cr | V | Mo | W | Some other elements

↓ ↓ ↓ ↓ ↓ ↓

Weighing

↓

Repeating arc melting
predetermined times elaborately

↓

Heat treating by retaining at
temperature region just under melting
point for prescribed period of time

↓

Quenching by placing in ice water

↓

Hydrogen storage alloy

# Fig. 2

## Ti—Cr Binary State Diagram

at %

Fig. 3

X-Ray Diffraction Pattern of as Heat-Treated
(1400°C, 1hr) Ti$_{40}$Cr$_{57.5}$M$_{2.5}$

Fig. 4

Hydrogen Storage Characteristic (4 0℃) of
as Heat-Treated (1400℃, 1 hr) T i 40 C r 57.5 M o 2.5 Alloy

Fig. 5

Hydrogen Storage Characteristic (4 0℃) of
as Heat-Treated (1400℃, 1 hr) $Ti_{40}Cr_{57.5}W_{2.5}$ Alloy

Fig. 6

Fig. 7

Fig. 8

X-Ray Diffraction Pattern of as Heat-Treated
(1400°C, 1hr) T i 42.5 C r 57.5 Al loy and
as Heat-Treated (1400°C, 2hr) T i 40 C r 60 Al loy

Fig. 9

Fig. 10

Figure: Hydrogen Pressure/MPa vs Hydrogen Concentration/Hydrogen in Metal mass% at 313K for $Ti_{40}Cr_{56}Mo_3Nb_1$ and $Ti_{40}Cr_{56}Mo_3Fe_1$.

Fig. 11

## INTERNATIONAL SEARCH REPORT

| | International application No. |
|---|---|
| | PCT/JP00/08936 |

| A. CLASSIFICATION OF SUBJECT MATTER |
|---|
| Int.Cl⁷   C22C1/00, 14/00, 27/06, 30/00 <br>         C22F1/11, 1/18 |

According to International Patent Classification (IPC) or to both national classification and IPC

| B. FIELDS SEARCHED |
|---|
| Minimum documentation searched (classification system followed by classification symbols) <br> Int.Cl⁷   C22C1/00, 14/00, 27/06, 30/00 <br>         C22F1/11, 1/18 |

Documentation searched other than minimum documentation to the extent that such documents are included in the fields searched
Jitsuyo Shinan Koho      1926-1996     Toroku Jitsuyo Shinan Koho   1994-2001
Kokai Jitsuyo Shinan Koho   1971-2001     Jitsuyo Shinan Toroku Koho   1996-2001

Electronic data base consulted during the international search (name of data base and, where practicable, search terms used)
WPI, JOIS(JICST FILE)

| C. DOCUMENTS CONSIDERED TO BE RELEVANT | | |
|---|---|---|
| Category* | Citation of document, with indication, where appropriate, of the relevant passages | Relevant to claim No. |
| X | JP, 10-121180, A (Toyota Motor Corporation), <br> 12 May, 1998 (12.05.98), Claims, Par. No. 6, line 6 <br> (Family: none) | 1-2 <br> 3-4 |
| Y | JP, 11-106859, A (Toyota Motor Corporation), <br> 20 April, 1999 (20.04.99), Claims (Family: none) | 3-4 |
| Y | FR, 2778189, A (TOYOTA JIDOSYA KABUSHIKI KAISYA), <br> 05 November, 1999 (09.11.99), <br> Claims <br> & JP, 11-310844, A   & DE, 19918329, A <br> & CA, 2268534, A     & CN, 1240837, A | 3-4 |

☐   Further documents are listed in the continuation of Box C.     ☐   See patent family annex.

| *   Special categories of cited documents: <br> "A"   document defining the general state of the art which is not considered to be of particular relevance <br> "E"   earlier document but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |
|---|---|
| Date of the actual completion of the international search <br> 21 February, 2001(21.02.01) | Date of mailing of the international search report <br> 06 March, 2001 (06.03.01) |
| Name and mailing address of the ISA/ <br>    Japanese Patent Office | Authorized officer |
| Facsimile No. | Telephone No. |

Form PCT/ISA/210 (second sheet) (July 1992)